# EUROPEAN PATENT APPLICATION

(11) **EP 3 808 435 A1**
(43) Date of publication of application: **21.04.2021**
(21) Application number: 19203629.1
(22) Date of filing: 16.10.2019
(51) Int. Cl.: B01D 65/08, B01D 69/04, B01D 69/08

(54) **MEMBRANE SYSTEM, SPINNERET FOR MANUFACTURING THE MEMBRANE SYSTEM, DEVICE INCLUDING THE SPINNERET AND METHOD FOR FORMING THE MEMBRANE SYSTEM**

(71) Applicant: DWI - Leibniz-Institut für Interaktive Materialien e.V., 52056 Aachen (DE)
(72) Inventor: TEPPER, Maik, 52064 Aachen (DE); WALORSKI, Julius, 52064 Aachen (DE); WESSLING, Matthias, 52074 Aachen (DE)
(74) Representative: Müller-Boré & Partner Patentanwälte PartG mbB

(57) **Abstract**

The present invention relates to a membrane system including a hollow fiber membrane and static mixer arranged within the hollow portion of the hollow fiber membrane, a spinneret for manufacturing the membrane system, a device including the spinneret and a method for forming the membrane system.

## Description

The present invention relates to a membrane system including a hollow fiber membrane and static mixer arranged within the hollow portion of the hollow fiber membrane, a spinneret for manufacturing the membrane system, a device including the spinneret and a method for forming the membrane system.

According to the state of the art, membrane systems including a tubular membrane structure and a static mixer arranged within the tubular membrane structure are only available at specific sizes. Specifically, prior art membrane systems have an inner diameter of the tubular membrane structure of substantially more than 10 mm (for instance see US 5 628 909 B1). However, for certain applications, membrane systems of smaller sizes are needed. Such applications include drinking water and wastewater treatment, food processing, dialysis, reverse osmosis, gas/liquid (e.g. bubble-free oxygenation) and liquid/liquid (e.g. nitrate removal) membrane contactors and membrane reactors (e.g. lignin depolymerisation).

Furthermore, conventional manufacturing methods require the separate fabrication of the tubular membrane structure and the static mixer, followed by inserting the static mixer into the tubular membrane structure. The insertion of the static mixer into the tubular structure is tedious, specifically in cases where the tubular membrane structure is sensitive to rupture and in cases where the respective size of the tubular membrane structure and the static mixer is rather small. Therefore, a method for manufacturing a membrane system including a tubular membrane structure as well as a static mixer is desired that does not require the step of inserting the static mixer into the tubular membrane structure.

Accordingly, the technical problem underlying the present invention is to provide a membrane system including a hollow fiber membrane and a static mixer arranged within the hollow portion of the hollow fiber membrane, that should have a small size; a method for forming a membrane system including a hollow fiber membrane and a static mixer arranged within the hollow portion of the hollow fiber membrane, wherein the membrane structure should be produced without the necessity of introducing the static mixer into the hollow fiber membrane; as well as a spinneret and a device for the method.

The solution to the above technical problem is achieved by providing the embodiments characterized in the claims.

In particular, in a first aspect, the present invention relates to a membrane system including a hollow fiber membrane and a static mixer arranged within the hollow portion of the hollow fiber membrane, wherein the static mixer includes sections having the shape of a twisted ribbon and the hollow fiber membrane has an inner diameter of at most 10 mm.

The static mixer arranged within the hollow portion of the hollow fiber membrane acts as a turbulence promoter. That is, when using the membrane system according to the present invention for filtering a fluid, the static mixer induces non-laminar flow within the hollow portion of the hollow fiber membrane by deflecting the fluid, inducing vortices, enhancing particle back-transport, increasing the shear rate at the membrane surface and the like. As a result, the performance of the membrane system in the filtration of a fluid is substantially improved.

In this context, it must be noted that the membrane system according to the present invention can not only be used for filtration. In particular, the inventive membrane system can be used as membrane contactor and as membrane reactor (gas/liquid and liquid/liquid contacting with a membrane in between a defined interface, wherein species interchange occurs by diffusive mass transfer (comparable to extraction processes)).

Moreover, due to its small design (the hollow fiber membrane of the membrane system according to the present invention has an inner diameter of at most 10 mm), the inventive membrane system has an improved surface to volume ratio as well as a higher mechanical stability.

Although being referred to as "hollow fiber membrane", the hollow fiber membrane of the membrane system according to the present invention may have an inner diameter of 80 µm to less than 500 µm (hollow fiber membrane), 500 µm to less than 5 mm (capillary membrane), or 5 mm to 10 mm (tubular membrane).

Tubular membranes are usually not self-supporting membranes. Conventionally, they are located on the inside of a tube, made of a special kind of material. This material is the supporting layer for the membrane. Because the location of tubular membranes is normally inside a tube, the flow in a tubular membrane is usually inside out. The main cause for this is that the attachment of the membrane to the supporting layer is usually very weak. Because of the size of the membrane surface, plugging of tubular membranes is not likely to occur. A drawback of tubular membranes is that the packing density may be low, which results in high prices per module.

A capillary membrane usually has a mechanical stability which is sufficiently strong to resist filtration pressures. Because of this, the flow through capillary membranes can be both inside out and outside in. The diameter of capillary membranes is smaller than that of tubular membranes. Because of the smaller diameter the chances of plugging are much higher with a capillary membrane. A benefit is that the packing density can be much greater.

Hollow fiber membranes conventionally are membranes with a low diameter. Consequentially, the chances of plugging of a hollow fiber membrane are rather high. The membranes are normally used for the treatment of water with a low suspended solids content. The packing density of a hollow fiber membrane can be very high.

Moreover, the fabrication of the inventive membrane system requires only low costs.

In particular, hollow fiber membranes often consist of only one material, the larger "tubular membranes" are often composite structures consisting of a non-woven support layer and porous polymer coating. In contrast thereto, the modular construction of the inventive membrane system is much cheaper.

According to the present invention, the hollow fiber membrane of the membrane system according to the present invention is not particularly limited. The hollow fiber membrane may have a structure of a conventional hollow fiber membrane. Specifically, the hollow fiber membrane has at least one opening which is suited as an inlet for a fluid to be filtrated. The hollow fiber membrane may include two openings opposed to one another.

According to the present invention, the hollow fiber membrane has an inner diameter of at most 10 mm. The inner diameter can be determined by measuring the greatest distance of a cross-section of the hollow fiber membrane, wherein the cross-section is taken in a plane that is perpendicular to the direction along which the hollow fiber membrane extends (fluid flow direction).

According to the present invention, the inner diameter of the hollow fiber membrane may vary along the fluid flow direction. However, it is preferred that the inner diameter is substantially constant along the fluid flow direction. Preferably, in case the inner diameter of the hollow fiber membrane varies, the smallest inner diameter is at least 85%, preferably at least 90%, more preferably at least 95%, particularly preferably at least 99% of the largest diameter of the hollow fiber membrane. Moreover, in case the diameter varies, the smallest value is taken as the inner diameter.

According to a preferred embodiment of the present invention, the hollow fiber membrane has an inner diameter of at most 7.5 mm, preferably at most 5 mm, more preferably at most 3 mm.

The cross-sectional shape of the hollow fiber membrane is not particularly limited according to the present invention. In principle, it may be of any shape such as a regular shape, an irregular shape, a symmetric shape, a polygonal shape such as square, triangle and the like. The polygonal shapes may have rounded edges. According to a preferred embodiment of the present invention, the hollow fiber membrane of the membrane system according to the present invention has a rotationally symmetric shape, wherein the rotation symmetry axis is collinear with the direction along which the hollow fiber membrane extends/the fluid flow direction. It is particularly preferred that the hollow fiber membrane of the membrane system according to the present invention has an annular cross-sectional shape.

According to the present invention, the thickness of the membrane material constituting the hollow fiber membrane of the membrane system according to the present invention is not particularly limited. Preferably, the hollow fiber membrane has a membrane thickness of at most 2.000 mm, more preferably at most 1.000 mm, even more preferably at most 750 µm, particularly preferably at most 500 µm. The membrane thickness of the hollow fiber membrane may vary along the direction along which the hollow fiber membrane extends. Preferably, the smallest membrane thickness is at least 90%, more preferably at least 95%, particularly preferably at least 99% of the largest membrane thickness. Herein, in case the thickness varies, the smallest value is taken as the membrane thickness.

According to a further preferred embodiment of the present invention, the hollow fiber membrane of the membrane system according to the present invention is formed by a porous membrane material. When the membrane material is porous, the membrane system according to the present invention is particularly suited for filtering a fluid or for being used as a membrane contactor or membrane reactor.

According to the present invention, the static mixer is arranged within the hollow portion (lumen) of the hollow fiber membrane. The length of the static mixer may be different from the length of the hollow fiber membrane. Here, the "length" is the length dimension of the hollow fiber membrane or the static mixer along the fluid flow direction. That is, the static mixer may be longer than the hollow fiber membrane, shorter than the hollow fiber membrane or may have the same length as the hollow fiber membrane. It is preferred that the length of the static mixer corresponds to the length of the hollow fiber membrane.

According to another preferred embodiment of the present invention, the static mixer has a width of at most 9 mm, preferably at most 6.5 mm, more preferably at most 4 mm, particularly preferably at most 2 mm. Moreover, it is preferred that the width of the static mixer is by 0.5 to 2 mm, preferably by 1.0 to 1.5 mm smaller than the inner diameter of the hollow fiber membrane.

According to a further preferred embodiment of the present invention, each of the hollow fiber membrane and the static mixer are formed from a polymer material. According to the present invention, the hollow fiber membrane may be formed from any polymer material that is suitable for a hollow fiber membrane (membrane forming polymer). Such polymer materials include but are not limited to polyvinylidene fluoride (PVDF), polyacrylonitrile (PAN), polypropylene (PP), polyethylene (PE), polysulfone (PSU), polyethersulfone (PES/PESU), polyarylester sulfone (PAES), polyamide (PA), polyphenylene oxide (PPO) and polytetrafluoroethylene (PTFE).

Moreover, the static mixer may be formed from a polymer material that is the same or different from the polymer material of the hollow fiber membrane. These materials include the same as mentioned above in the context of the polymer material of the hollow fiber membrane, i.e. membrane forming polymers such as PVDF, PAN, PP, PE, PSU, PES/PESU, PAES, PA and PPO.

According to a particularly preferred embodiment of the present invention, each of the hollow fiber membrane and the static mixer are formed from the same polymer material.

Particularly preferred polymer materials are PSU, PVDF, PES/PESU and PAES.

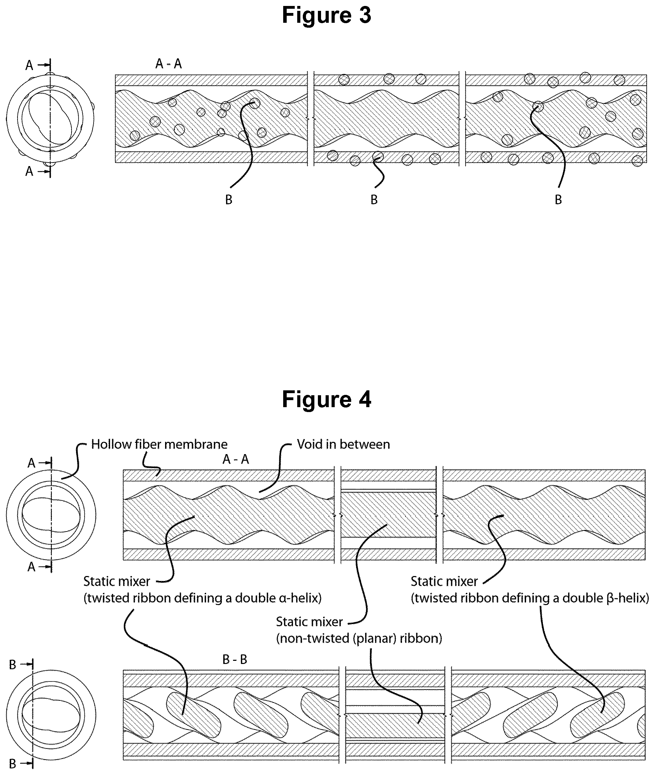

According to the present invention, the static mixer includes sections having the shape of a twisted ribbon. In such a shape, each of the two outer edges of the twisted ribbon form a helix so that the twisted ribbon defines a double helix. According to the present invention, the static mixer may include sections having the shape of a twisted ribbon defining a double α-helix and/or sections having the shape of a twisted ribbon defining a double β-helix. The sections of double α-helix and/or double β-helix may be interrupted by sections of the static mixer having the shape of a non-twisted (planar) ribbon, where the edges of the ribbon form straight lines (see Figure 4). In more general terms, a preferred embodiment of the present invention relates to a membrane system wherein the entirety or only one or more sections of the static mixer has/have the shape of a twisted ribbon.

Preferably, the length of a section of the static mixer constituting a ribbon that has been twisted by an angle of 180° is at least 1.5 mm, preferably at least 2.4 mm; and at most 10 mm, preferably at most 7.0 mm. The "length of a section of the static mixer constituting a ribbon that has been twisted by an angle of 180°" refers to the length of one twist by 180° of the twisted ribbon section, i.e. the length of a half turnaround.

According to a preferred embodiment of the present invention, the hollow fiber membrane and/or the static mixer of the membrane system include(s) particles (B), wherein the hollow fiber membrane and/or the static mixer has/have the particles (B) immobilized. When the hollow fiber membrane and/or the static mixer includes the particles (B), it is preferred that the hollow fiber membrane and/or the static mixer is/are formed from a polymer material, as mentioned above. It is preferred that the static mixer includes the particles (B).

The particles (B) may include particles of at least one second polymer (B'). The second polymer is different from the polymer optionally constituting the hollow fiber membrane and the static mixer. Additionally or alternatively, the particles (B) may include non-polymer particles (B") such as inorganic compound particles, metal particles and the like. According to the present invention, the particles (B") are particularly preferred.

The particles (B) can be additives such as ion exchange resins, adsorbents, catalysts, conductive materials, magnetic particles, metal-organic frameworks (MOFs), enzymes, etc. or other (functional) polymers. Different kinds of particles (B) may be included in the hollow fiber membrane and/or the static mixer. The incorporation of the particles (B) into the hollow fiber membrane and/or the static mixer can be carried out by blending the particles (B) into polymer solution (a) and/or (c), as described below.

According to the present invention, the weight ratio of the particles (B) is not particularly limited. Preferably, the weight ratio is at most 50 wt%, more preferably at most 40 wt%, even more preferably at most 15 wt%, still more preferably at most 12.5 wt%, more preferably at most 10 wt%, particularly preferably at most 7.5 wt%, most preferably at most 5 wt%, based on the total weight of the membrane system and the particles (B). As the production of the particles (B) may require extensive efforts and costs, a low weight ratio of the particles (B) makes the manufacturing of the membrane system of the present invention more economical. A high weight ratio of the particles (B) is not necessary in order for them to exhibit their respective effects. Nevertheless, the weight ratio of the particles (B) may be at least 0.01 wt%, preferably at least 0.1 wt%, more preferably at least 0.5 wt% , particularly preferably at least 1.0 wt%, most preferably at least 2.5 wt%.

The weight ratio of the particles (B) refers to the solid weight of the particles (B). The weight ratio of the particles (B) can be determined by thermogravimetric analysis.

According to the present invention, the hollow fiber membrane and/or the static mixer has the particles (B) immobilized. That is, the particles (B) are entrapped by the hollow fiber membrane and/or the static mixer. Therefore, the particles (B) cannot be easily removed (e.g. washed out) from the membrane system so that the effects of the particles (B) (such as an increased fouling resistance of the membrane system according to the present invention) is maintained even when the membrane system is used for filtration for a prolonged time period.

According to a preferred embodiment of the present invention, the particles (B) have an equivalent circular area diameter of 10 nm to 2000 nm, preferably 40 nm to 1800 nm, particularly preferably 100 to 1500 nm, most preferably 400 to 1200 nm. Particles (B) having such a size can be stably immobilized by the hollow fiber membrane and/or the static mixer.

The equivalent circular area diameter of a particle is the diameter of a circle that has the same area as the cross-sectional area of the particle. The cross-sectional area of the particle can be measured by recording a microscopic image of the particle (e.g. by TEM) and determining the area of the particle in the microscopic image. Based on the cross-sectional particle area taken from the microscopic image, the equivalent circular area diameter of a particle can be determined.

According to a preferred embodiment of the present invention, at least a part of the particles (B) are present on at least one surface of the hollow fiber membrane and/or the surface of the static mixer. Preferably, at least a part of the particles (B) present on the surface are both present on the surface as well as immobilized by the hollow fiber membrane and/or the static mixer. These particles (B) present on the surface are embedded in the hollow fiber membrane / the static mixer so that a highly stable connection with the hollow fiber membrane / the static mixer is established and such that a portion of each of the particles (B) is exposed to the environment of the membrane system. Particles (B) that are present on the surface of the hollow fiber membrane / static mixer can be made visible by means of field emission scanning electron microscopy (FESEM). Moreover, based on FESEM, it is also possible to determine the ratio of the surface area that is covered by the particles (B). According to the present invention, this ratio is not particularly limited. Preferably, the ratio of the surface area that is covered by the particles (B), based on the entire surface area of the surface under consideration, is 1% to 99%, more preferably 10% to 90%, particularly preferably 25% to 75%, most preferably 40% to 60%.

Furthermore, as mentioned above, the particles (B) may include particles of an ion exchange resin, an adsorbent, a catalyst, a conductive material, a magnetic material, etc. or other (functional) polymers. Such kind of particles (B) are particularly advantageous when using the membrane system according to the present invention as a membrane contactor, a membrane reactor or a membrane adsorber. By incorporation of the above particles (B), functional properties can be imparted to the membrane system. Specifically, the above particles (B) can be helpful for catalyzing a chemical reaction, removing substances (e.g. by adsorption), providing electrical conductivity, enabling adjusting the temperature of the membrane system and the like.

The particles (B) can be incorporated into the membrane system of the present invention by post-modifying the membrane system that does not yet have the particles (B). However, it is preferred that the particles (B) are incorporated at the same time the membrane is formed. Thereby, an even distribution of the particles (B) can be obtained and the particles (B) are firmly fixed in the membrane material so that they are not washed out easily. That is, the particles (B) can be incorporated and firmly bound to the membrane material. Furthermore, incorporating the particles (B) in this manner is more simple, cost effective and faster than post-modifying a preliminarily produced membrane.

Incorporating the particles (B) at the same time the membrane is formed may under certain circumstances undesirably affect the structure of the membrane. For instance, even though the incorporated particles (B) are firmly bound to the membrane material, they can exceptionally be washed out. In such a case, a void or hole may remain were formerly a particle (B) was present in the membrane material. Since the particles can be larger than the pore size of the membrane material, the void or hole can be larger than the membrane material's pore size. Thus, the selectivity of the membrane system may worsen. However, when the particles (B) are present in the static mixer only, such a problem does not occur because the filtration effect is mainly governed by the hollow fiber membrane. Therefore, it is preferred according to the present invention that the particles (B) are only present in the static mixer.

In a further aspect, the present invention relates to a spinneret having a first outlet opening, a second outlet opening and a third outlet opening, wherein the first outlet opening is arranged on an outlet axis of the spinneret, has an oblong cross-sectional shape and is movable around the outlet axis; the second outlet opening is arranged around the first outlet opening and within the circumference of the third outlet opening; and the third outlet opening is arranged around the first outlet opening and around the circumference of the second outlet opening. The spinneret according to the present invention is suitable for forming a membrane system including a hollow fiber membrane and a static mixer arranged within the hollow portion of the hollow fiber membrane.

Here, the expression "movable around the outlet axis" means that the first outlet opening can be rotated around the outlet axis. In this context, the outlet axis is collinear with the fluid flow direction of a membrane system formed by using the spinneret according to the present invention. Moreover, the outlet axis is collinear with the extrusion direction when using the spinneret according to the present invention for extruding.

According to the present invention, the first outlet opening has an oblong cross-sectional shape in a cross-section along a plane that is perpendicular to the outlet axis. That is, when looking at the spinneret according to the present invention along a direction that is collinear with the outlet axis, the first outlet opening appears in an oblong shape.

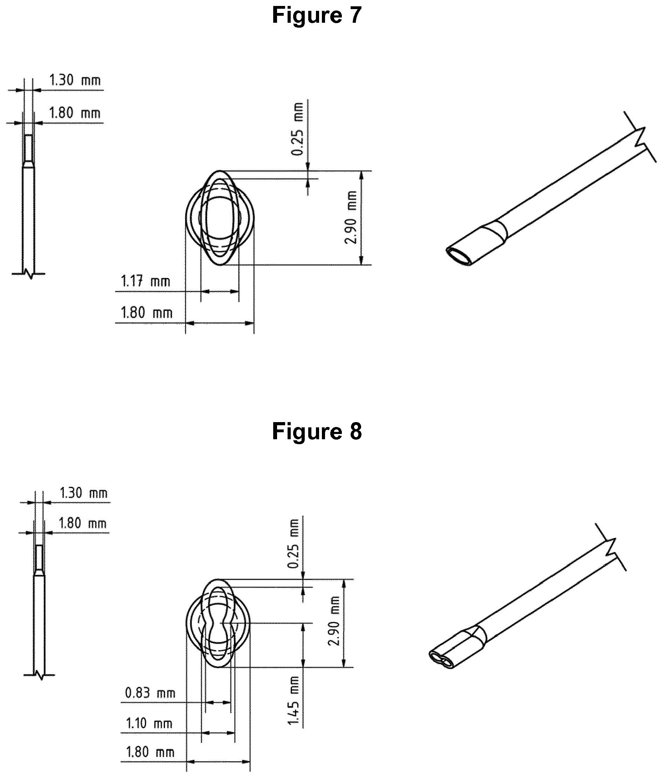

According to the present invention, a shape is considered as "oblong" if it has an aspect ratio of more than 1.0, preferably at least 2, particularly preferably at least 5. According to the present invention, the oblong cross-sectional shape of the first outlet opening may have the circumferential shape of the number "8" (8-like shape, see Figure 8). Moreover, the oblong cross-sectional shape may have the shape of an ellipse, rectangle and the like. Due to the oblong shape of the first outlet opening, a static mixer having a ribbon shape can be formed by extrusion. Moreover, since the first outlet opening is movable around the outlet axis, it is possible to form sections of the static mixer having the shape of a twisted ribbon by moving the first outlet opening around the outlet axis at the time of extrusion (cf. see the below step (v)).

The aspect ratio of the oblong cross-sectional shape is the ratio of the longest dimension of the oblong cross-sectional shape to the longest length dimension of the cross-sectional shape in a direction perpendicular to the direction of the overall longest length dimension.

According to a preferred embodiment of the present invention, the first outlet opening has a diameter of at most 9 mm, preferably at most 6.5 mm, more preferably at most 4 mm, particularly preferably at most 2 mm. When the first outlet opening has a diameter as defined above, the static mixer can be formed with a corresponding width.

According to the present invention, the first outlet opening is arranged on an outlet axis of the spinneret. That is, the outlet axis intersects or cuts through the first outlet opening. Preferably, the outlet axis cuts through the centroid of the cross-sectional shape of the first outlet opening.

According to a preferred embodiment of the present invention, the first outlet opening, the second outlet opening, and/or the third outlet opening has/have a rotationally symmetric shape and the outlet axis is collinear with the rotation symmetry axis of the first outlet opening, the rotation symmetry axis of the second outlet opening and/or the rotation symmetry axis of the third outlet opening. It is particularly preferred that each of the first, second and third outlet openings has a rotationally symmetric shape and that the outlet axis is collinear with the rotation symmetry axis of the first, second and third outlet opening.

According to a further preferred embodiment of the present invention, the second outlet opening is the outlet opening of a flow channel for a bore solution. Moreover, it is preferred that the first outlet opening is an opening of a hollow shaft defining a flow channel for a polymer solution for forming a static mixer, the hollow shaft is movable around the outlet axis and fluidically connected to a reservoir for the static mixer polymer solution. According to another preferred embodiment of the present invention, the third outlet opening is the outlet opening of a flow channel for a polymer solution for forming a hollow fiber membrane.

According to a further preferred embodiment of the present invention, the second outlet opening and/or the third outlet opening has/have an annular cross-sectional shape. It is particularly preferred that each of the second and third outlet openings has an annular cross-sectional shape.

In a further aspect, the present invention relates to a device for extruding a membrane system including a hollow fiber membrane and a static mixer arranged within the hollow portion of the hollow fiber membrane, wherein the device includes the above spinneret.

According to a preferred embodiment of the present invention, the device includes a motor for moving the first outlet opening around the outlet axis of the spinneret. Preferably, the device includes a motor and a hollow shaft defining a flow path for a polymer solution for forming the static mixer (polymer solution (a)), wherein the first outlet opening is an opening of the hollow shaft and the hollow shaft is movable around the outlet axis and fluidically connected to a reservoir for the static mixer polymer solution (a), wherein the reservoir is also part of the device.

It is further preferred that the device according to the present invention includes a gear box which couples the motor to the hollow shaft. The motor is preferably a stepper motor. Furthermore, the connection between the reservoir for the polymer solution (a) and the hollow shaft is preferably established by a rotation coupling which connects to the hollow shaft such that the rotational movement of the hollow shaft is decoupled from the reservoir for polymer solution (a). Moreover, a connector such as tubing may be comprised by the device in order to fluidically connect the rotation coupling to the reservoir.

Furthermore, the device may include a rotation sealing in which the hollow shaft is mounted. For instance, the rotation sealing may be an OMNIFIT LTD. CONNECTOR, 3-WAY (T) T-piece assembly that connects a reservoir for the bore solution (b) and a reservoir for the static mixer polymer solution (a) to the spinneret. The rotation sealing may be formed of a PTFE part and a double O-ring assembly. The double O-ring assembly holds and seals the hollow shaft.

In a further aspect, the present invention relates to a method for forming a membrane system including a hollow fiber membrane and a static mixer arranged within the hollow portion of the hollow fiber membrane, comprising the steps (i) providing the above spinneret; (ii) providing a polymer solution (a) for forming the static mixer; (iii) providing a bore solution (b); (iv) providing a polymer solution (c) for forming the hollow fiber membrane; (v) extruding the polymer solution (a) for forming the static mixer through the first opening, extruding the bore solution (b) through the second opening, extruding the polymer solution (c) for forming the hollow fiber membrane through the third opening to form a jet of the solutions (a), (b) and (c); (vi) moving the first opening around the outlet axis for at least a part of the duration of step (v); (vii) immersing the jet into a coagulation bath; to coagulate the hollow fiber membrane and the static mixer. In the immersing step (vii), due to the bore solution and the coagulation bath, the jet is exposed to conditions which result in the coagulation of the hollow fiber membrane as well as the static mixer.

According to the above method of the present invention, it is possible to form a membrane system including a hollow fiber membrane and a static mixer arranged within the hollow portion of the hollow fiber membrane without the necessity of separately forming the hollow fiber membrane and the static mixer and introducing the static mixer into the hollow portion of the hollow fiber membrane, which is tedious and may result in a damage of the hollow fiber membrane. According to the present invention, the hollow fiber membrane and the static mixer are formed simultaneously by extruding polymer solutions (a) and (c) as well as the bore solution (b) through the spinneret according to the present invention.

By employing the method of the present invention, it is possible to form the membrane system according to the present invention wherein the hollow fiber membrane has an inner diameter of at most 10 mm. However, the inventive method also enables the manufacture of membrane systems having larger inner diameters.

In step (i) of the inventive method, the above-described spinneret is provided. The above explanations regarding said spinneret also apply to the method according to the present invention. According to a preferred embodiment of the present invention, in step (i), not only the spinneret but the above device including the spinneret is provided.

In step (ii) of the inventive method, the polymer solution (a) for forming the static mixer is provided. The polymer solution (a) is of the same type as a conventional polymer solution for forming a hollow fiber membrane e.g. by temperature induced phase separation (TIPS) and/or non-solvent induced phase separation (NIPS). Hence, a person skilled in the art is able to select an appropriate solution (a) for forming the static mixer based on his background knowledge.

The same as outlined above with regard to polymer solution (a) applies to polymer solution (c) for forming the hollow fiber membrane which is provided in step (iv) of the method according to the present invention.

Each of polymer solution (a) and polymer solution (c) is a membrane-forming polymer solution. A membrane-forming solution contains at least one membrane-forming polymer and at least one solvent.

Suitable polymers to be included in polymer solutions (a) and (c) include, but are not limited to, PVDF, PAN, PTFE, PP, PE, PSU, PES/PESU, PAES, as already explained above in the context of the membrane system according to the present invention. In this context, the above explanations with regard to said membrane system according to the present invention also apply to the method for forming a membrane system according to the present invention, unless not otherwise stated.

Polymer solutions (a) and (c) may have the same or different compositions. Specifically, the polymer included in solution (a) may be different from the polymer included in solution (c). Each of polymer solutions (a) and (c) may contain one of more different polymers. According to a preferred embodiment of the present invention, polymer solutions (a) and (c) are constituted by the same components but may have different concentrations of the said components. In particular, in view of the minute structure of the static mixer, it is preferred that the polymer solution (a) has a lower solid content/a higher solvent content than the polymer solution (c). Thereby, a lower viscosity of the polymer solution (a) can be achieved, which facilitates the production of the static mixer in the method according to the present invention.

In the method according to the present invention, the hollow fiber membrane and the static mixer can be coagulated by TIPS and/or by NIPS. Typical membrane forming polymers for TIPS include but are not limited to PVDF, PAN, PTFE, PP and PE, wherein PVDF and PAN are also suited for a combination of TIPS and NIPS. Typical membrane forming polymers for NIPS (or a combination of NIPS and TIPS) include but are not limited to, PSU, PES/PESU, PAES, PVDF and PAN.

Each of the solutions (a) and (c) includes at least one solvent. For each of polymer solutions (a) and (c), the at least one solvent is selected such that a solution can be formed of the respective at least one membrane-forming polymer. The at least one solvent preferably includes an organic solvent such as N-methyl-2-pyrrolidone (NMP), dimethylformamide (DMF), dimethylacetamide (DMAc), dimethylsulfoxide (DMSO), tetrahydrofuran (THF), wherein NMP and DMSO are preferred. In addition to the one or more organic solvents, water may be contained as a non-solvent. Preferably, the water is deionized water. According to the present invention, the weight ratio of water to organic solvent in polymer solutions (a) and (c) is preferably 0 to 20%, more preferably 0 to 15%, even more preferably 1 to 15%, particularly preferably 3 to 12%.

In addition to the membrane forming polymer and the solvent, the polymer solutions (a) and (c) may contain a pore-forming additive. Suitable pore-forming additives are known to the skilled person. For instance the pore-forming additive may be a polymer that does not form a membrane (non-membrane-forming polymer) such as polyvinylpyrrolidone (PVP), polyethyleneglycol (PEG), polyoxazoline, polypropylene glycol, polyglycolmonoester, a copolymer of polyethyleneglycol with polypropylene glycol, a water-soluble cellulose derivative, polysorbate, polyethylene-polypropylene oxide copolymer, polyethyleneimine, and combinations thereof. Further pore-forming additives that can be used in solutions (a) and/or (c) are glycerol and lithium chloride. Preferred pore-forming additives are PVP K30 and PVP K90. Here, "K30" and "K90" indicates that the PVP has a K-value of 30 and 90, respectively. The K-value is commonly used for characterizing polymers and directly relates to the average molecular mass of the polymer. The K-value can be taken as an indicator for the degree of polymerization and the polymer chain length.

The bore solution (b) provided in step (iii) of the method according to the present invention is not particularly limited as long as it induces coagulation/precipitation of the membrane-forming polymer solutions (a) and (c). Accordingly, the bore solution contains a non-solvent for the membrane forming polymer, for instance water. Preferably, the bore solution (b) further contains the same constituents as the polymer solutions (a) and (c), except for the membrane-forming polymer. However, the bore solution (b) may also contain constituents different from the ones of the solutions (a) and (c).

According to a preferred embodiment of the present invention, the bore solution (b) contains an organic solvent such as NMP and deionized water. Preferably, the weight ratio of water to organic solvent in the bore solution (b) is 20 to 100%, preferably 40 to 60%. Similar to polymer solutions (a) and (c), the bore solution (b) may contain a non-membrane-forming polymer such as polyvinylpyrrolidone (PVP), polyethyleneglycol (PEG), glycerol, polyoxazoline, polypropylene glycol, polyglycolmonoester, a copolymer of polyethyleneglycol with polypropylene glycol, a water-soluble cellulose derivative, polysorbate, polyethylene-polypropylene oxide copolymer, polyethyleneimine, and combinations thereof. PVP is preferred, even more preferred are PVP K30 and K90. The non-membrane-forming polymer can be added in order to adjust the viscosity of the bore solution and/or for controlling the speed of coagulation. (In the solutions (a) and (c), PVP (e.g. PVP K30 or PVP K90) may exert a pore forming effect during membrane formation and suppresses the formation of macro-voids in membranes.) The content of the non-membrane-forming polymer in the bore solution (b) is preferably 0 to 12 wt%, more preferably 1 to 10 wt%, particularly preferably 2 to 7 wt%.

According to a preferred embodiment of the present invention, at least one of the polymer solution (a), the bore solution (b), the polymer solution (c) and the coagulation bath contains the particles (B) at least at the time of step (vii).

In case the particles (B) are contained in the polymer solution at the time of step (vii) or before, the particles (B) will be substantially evenly distributed over the entire volume of the membrane system. In case the particles (B) are contained in the coagulation bath and/or the bore solution at the time of step (vii) or before, the particles (B) will be present on at least one surface of the hollow fiber membrane and/or the static mixer. It is preferred that the particles (B) are contained in the polymer solution (a) and/or (c) at the time of step (vii) or before. It is particularly preferred that the particles (B) are contained in the polymer solution for forming the static mixer at the time of step (vii) or before.

In step (v) of the method according to the present invention, a jet of the solutions (a), (b) and (c) is extruded by employing the spinneret according to the present invention (preferably by employing the device according to the present invention). Specifically, the polymer solution (a) for forming the static mixer is extruded through the first opening of the spinneret, the bore solution (b) is extruded through the second opening of the spinneret, and the polymer solution (c) for forming the hollow fiber membrane is extruded through the third opening of the spinneret. Solutions (a) to (c) are extruded through the respective first, second and third opening at the same time (simultaneously). Thereby, a jet of the solutions (a), (b) and (c) having a specific shape is formed.

According to a preferred embodiment of the present invention, the flow rate of the bore solution (b) in step (v) is 1 to 250 ml/min, preferably 2 to 150 ml/min, more preferably 5 to 50 ml/min, for example 7 ml/min.

Moreover, the flow rate (extrusion rate) of polymer solution (c) in step (v) is preferably 1 to 250 g/min, more preferably 2 to 150 g/min, particularly preferably 5 to 50 g/min, for example 7.5 g/min.

In step (v), the flow rate of polymer solution (a) is preferably 0.5 to 150 g/min, more preferably 1 to 50 g/min, particularly preferably 2 to 30 g/min, for instance 3.5 g/min. According to the present invention, the method for forming a membrane system includes a step (vi) of moving the first opening around the outer axis for at least a part of the duration of step (v). As already noted above, the rotational movement of the first opening results in a static mixer that includes sections that have the shape of a twisted ribbon.

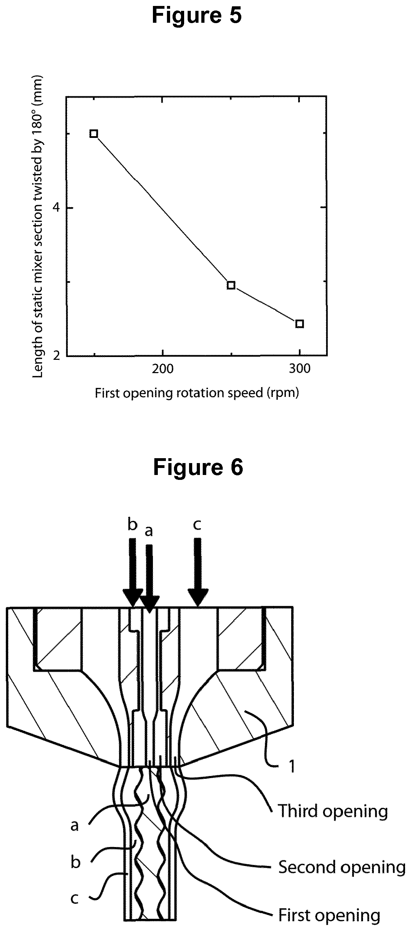

According to a preferred embodiment of the present invention, the first opening is moved (rotated) around the outlet axis at 50 to 5000 rotations/minute, preferably 70 to 1000 rotations/minutes, more preferably 100 to 500 rotations per minute, for example 280 rotations/minutes. By changing the rotation speed of the first opening, the length of a 180°-twist of the twisted ribbon shape of the static mixer can be adjusted (see Figure 5).

According to a further preferred embodiment of the present invention, (vi') the first opening is moved around the outlet axis for the entire duration of step (v); or (vi") the first opening is moved around the outlet axis for a part of the duration of step (v).

When the method according to the present invention includes step (vi'), the entirety of the static mixer has the shape of a twisted ribbon. Moreover, when the method according to the present invention includes step (vi"), only one of more sections of the static mixer has/have the shape of a twisted ribbon, whereas the other sections of the static mixer have the form of a planar ribbon (i.e. a plate shape).

Moreover, in step (vi) of the method according to the present invention, the rotation direction of the first opening may be changed so that the static mixer may include sections having the shape of a twisted ribbon, wherein the outer edges of the twisted ribbon define an α- or a β-double helix.

In step (vii) of the method for forming a membrane system according to the present invention, the jet of the solutions (a), (b) and (c) is immersed into a coagulation bath; to coagulate the hollow fiber membrane and the static mixer. In the immersing step (vii), due to the bore solution and the coagulation bath, the jet is exposed to conditions which result in the coagulation of the hollow fiber membrane as well as the static mixer.

According to a preferred embodiment of the present invention, the coagulation of step (vii) is carried out by temperature induced phase separation (TIPS), by non-solvent induced phase separation (NIPS) or by a combination of TIPS and NIPS. When the coagulation of step (vii) involves TIPS, the coagulation bath has a temperature that is different from the temperature of the jet. Due to the temperature difference, the polymers (a) and (c) are coagulated (precipitated). When step (vii) includes NIPS, the coagulation bath has a composition that results in coagulation of the hollow fiber membrane and the static mixer. In particular, the coagulation bath may include a solvent composition that represents a non-solvent for the polymers of solutions (a) and (c).

The jet of solutions (a) to (c) may be directly immersed into the coagulation bath, i.e. without any gap between the spinneret and the coagulation bath. However, it is preferred in view of processability that there is a gap between the spinneret and the surface of the coagulation bath. Although the gap may be absent (i.e. the gap may have a width of 0 cm), the gap preferably has a width of more than 0 cm, more preferably at least 5 cm, particularly preferably at least 15 cm. The gap width is preferably not longer than 150 cm, more preferably not longer than 50 cm.

According to a preferred embodiment, the method for forming a membrane system according to the present invention further includes a step of (viii) separating (removing) the coagulated hollow fiber membrane and static mixer (membrane system) from the coagulation bath. Subsequent to said step (viii), a step of (ix) immersing the coagulated hollow fiber membrane into a rinsing bath may be carried out. By virtue of said step (ix), the coagulated hollow fiber membrane and static mixture are rinsed (washed) so that components of solutions (a), (b) and (c) which are undesired in the membrane system can be removed.

Furthermore, subsequent to step (viii) or optionally step (ix), a step of (x') immersing the hollow fiber membrane and the static mixer (membrane system) into a collection bath can be carried out. Alternatively, the membrane system can be (x") collected on a collection drum.

The respective composition of the coagulation bath, the rinsing bath and the collection bath is not particularly limited and may include a solvent or solvent composition. As the solvent or solvent composition, an organic solvent and/or water may be used. As mentioned above, the coagulation bath has a composition and/or temperature that results in precipitation/coagulation of the membrane system. Preferably, the coagulation bath, the rinsing bath and the collection bath each consist of deionized water.

According to a preferred embodiment of the present invention, step (vii) and optionally steps (viii) to (x') are carried out by dragging the coagulated hollow fiber membrane and static mixer by means of a pulling wheel. Preferably, the pulling wheel pulls the coagulated hollow fiber membrane and static mixer (membrane system) at a speed of 0.1 to 40 m/min, more preferably 0.5 to 20 m/min, particularly preferably 0.7 to 7 m/min, for example 1.5 m/min.

Another possibility for manufacturing the membrane system of the present invention including the particles (B) is post-modifying the membrane system that does not yet have the particles (B).

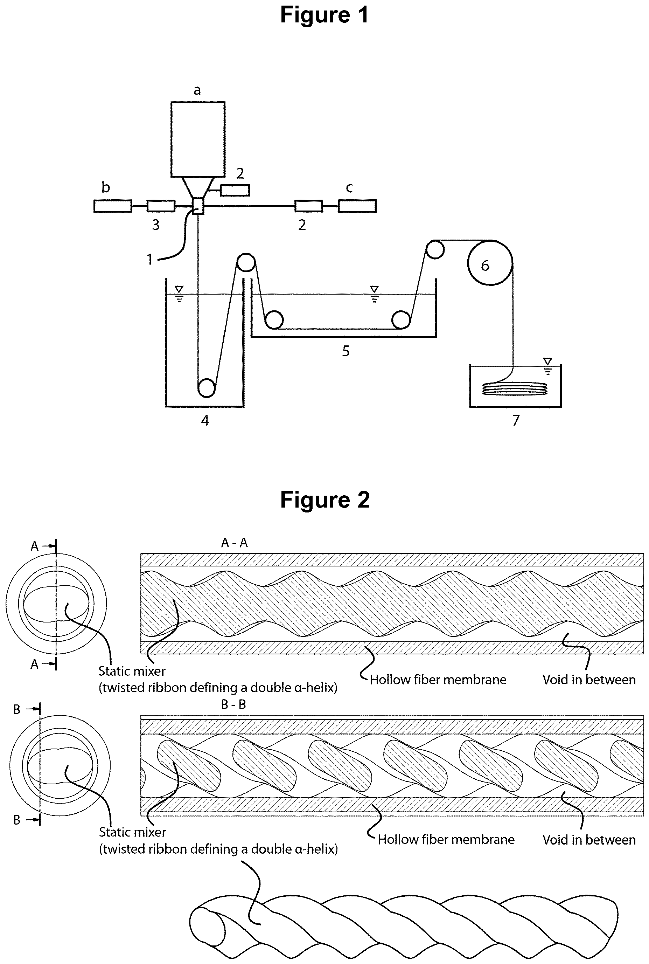

Figure 1 schematically shows a method for manufacturing a membrane system according to the present invention.
Figure 2 schematically shows a membrane system according to the present invention.
Figure 3 schematically shows membrane systems according to the present invention including particles (B).
Figure 4 schematically shows a membrane system according to the present invention having a specific geometry of the static mixer.
Figure 5 shows that the length of a twist of the static mixer by 180° can be adjusted by varying the speed of moving the first opening around the outlet axis.
Figure 6 schematically shows a spinneret being used in a process for forming a membrane system according to the present invention.
Figure 7 schematically shows an exemplary first outlet opening of a spinneret according to the present invention.
Figure 8 schematically shows another exemplary first outlet opening of a spinneret according to the present invention.

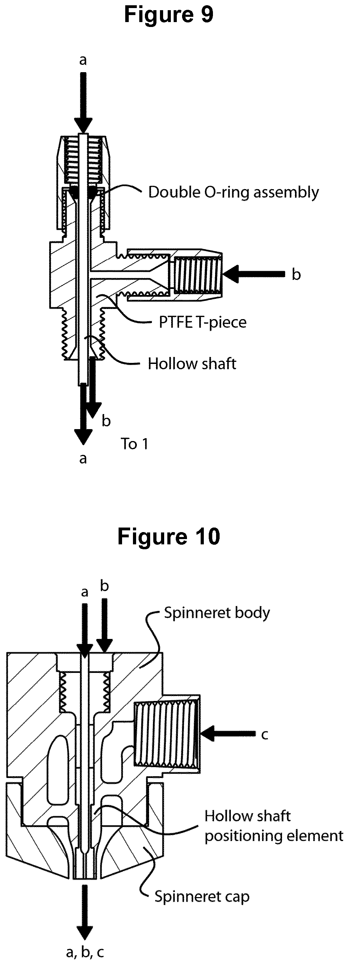

Figures 9 to 11 schematically show devices for manufacturing the membrane system according to the present invention.
Figure 12 displays an image of a membrane system according to the present invention obtained by micro X-ray computed tomography (CT).

### Reference sign list

- 1: Spinneret
- 2: Gear pump for polymer solution
- 3: Pump for bore solution
- 4: Coagulation bath
- 5: Washing bath
- 6: Pulling wheel
- 7: Collection bath

The present invention is further illustrated based on the following Example without being limited thereto.

### Example

A membrane system including a hollow fiber membrane and a static mixer was produced under the following experimental conditions.

### Compositions of polymer solutions (a), (b) and (c)

**Hollow fiber membrane polymer solution (c)**

| | |
|---|---|
| Polyethersulfone (PES) | 17 wt% |
| N-Methyl-2-pyrrolidone (NMP) | 67.5 wt% |
| Deionized water | 3.5 wt% |
| Polyvinylpyrrolidone (PVP K30) | 6 wt% |
| Polyvinylpyrrolidone (PVP K30) | 6 wt% |

**Static mixer polymer solution (a)**

| | |
|---|---|
| Polyethersulfone (PES) | 15 wt% |
| N-Methyl-2-pyrrolidone (NMP) | 74 wt% |
| Deionized water | 7 wt% |
| Polyvinylpyrrolidone (PVP K30) | 2 wt% |
| Polyvinylpyrrolidone (PVP K30) | 2 wt% |

**Bore solution (b)**

| | |
|---|---|
| N-Methyl-2-pyrrolidone (NMP) | 40 wt% |
| Deionized water | 50 wt% |
| Polyvinylpyrrolidone (PVP K30) | 5 wt% |
| Polyvinylpyrrolidone (PVP K30) | 5 wt% |

### Spinning parameters

**Hollow fiber membrane**

| | |
|---|---|
| Polymer solution (c) flow rate | 7.5 g/min |
| Bore solution (b) flow rate | 7 mL/min |
| Air gap length | 10 cm |
| Fiber pulling speed | 1.5 m/min |
| Temperature | room temperature (25 °C) |

**Static mixer**

| | |
|---|---|
| Polymer solution (a) flow rate | 3.5 g/min |
| First outlet opening rotation speed | 280 rotations/minute |
| Temperature | room temperature (25 °C) |

**Coagulation bath**

| | |
|---|---|
| Composition | 100 wt% deionized water |
| Temperature | room temperature (25 °C) |

**Rinsing bath**

| | |
|---|---|
| Composition | 100 wt% deionized water |
| Temperature | room temperature (25 °C) |

**Collection bath**

| | |
|---|---|
| Composition | 100 wt% deionized water |
| Temperature | room temperature (25 °C) |

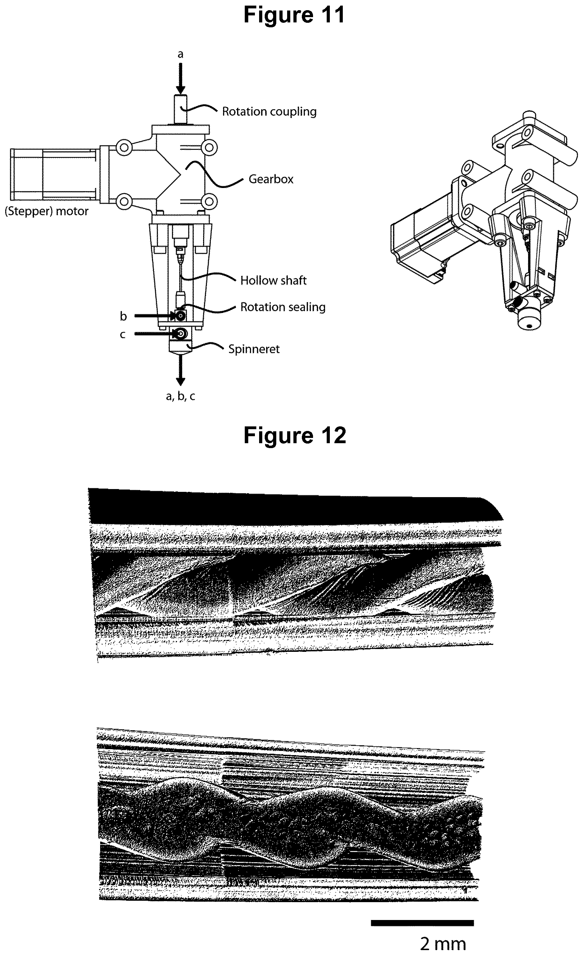

The result is displayed in Figure 12.

## Claims

1. A membrane system including a hollow fiber membrane and a static mixer arranged within the hollow portion of the hollow fiber membrane, wherein the static mixer includes sections having the shape of a twisted ribbon and the hollow fiber membrane has an inner diameter of at most 10 mm.

2. The membrane system according to claim 1,
wherein each of the hollow fiber membrane and the static mixer are formed from a polymer material, preferably the same polymer material.

3. The membrane system according to claim 1 or 2,
wherein the hollow fiber membrane has an inner diameter of at most 7.5 mm, preferably at most 5 mm, more preferably at most 3 mm.

4. The membrane system according to any one of claims 1 to 3,
wherein the static mixer has a width of at most 9 mm, preferably at most 6.5 mm, more preferably at most 4 mm, particularly preferably at most 2 mm.

5. The membrane system according to any one of claims 1 to 4,
wherein the entirety or only one or more sections of the static mixer has/have the shape of a twisted ribbon.

6. A spinneret having a first outlet opening, a second outlet opening and a third outlet opening, wherein
the first outlet opening is arranged on an outlet axis of the spinneret, has an oblong cross-sectional shape and is movable around the outlet axis;
the second outlet opening is arranged around the first outlet opening and within the circumference of the third outlet opening; and
the third outlet opening is arranged around the first outlet opening and around the circumference of the second outlet opening.

7. The spinneret according to claim 6,
wherein the first outlet opening has a diameter of at most 9 mm, preferably at most 6.5 mm, more preferably at most 4 mm, particularly preferably at most 2 mm.

8. The spinneret according to claim 6 or 7,
wherein the second outlet opening and/or the third outlet opening has/have an annular cross-sectional shape.

9. A device for extruding a membrane system including a hollow fiber membrane and a static mixer arranged within the hollow portion of the hollow fiber membrane, wherein the device includes the spinneret according to any one of claims 6 to 8.

10. A method for forming a membrane system including a hollow fiber membrane and a static mixer arranged within the hollow portion of the hollow fiber membrane, comprising the steps
(i) providing a spinneret according to any one of claims 6 to 8;
(ii) providing a polymer solution (a) for forming the static mixer;
(iii) providing a bore solution (b);
(iv) providing a polymer solution (c) for forming the hollow fiber membrane;
(v) extruding the polymer solution (a) for forming the static mixer through the first opening, extruding the bore solution (b) through the second opening, extruding the polymer solution (c) for forming the hollow fiber membrane through the third opening to form a jet of the solutions (a), (b) and (c);
(vi) moving the first opening around the outlet axis for at least a part of the duration of step (v);
(vii) immersing the jet into a coagulation bath;
to coagulate the hollow fiber membrane and the static mixer.

11. The method according to claim 10,
wherein the polymer solutions (a) and (c) independently include one or more polymers selected from the group consisting of polyvinylidene fluoride (PVDF), polyacrylonitrile (PAN), polypropylene (PP), polyethylene (PE), polysulfone (PSU), polyethersulfone (PES/PESU), polyarylethersulfone (PAES), polyamide (PA), and polyphenylene oxide (PPO).

12. The method according to claim 10 or 11, wherein
(vi') the first opening is moved around the outlet axis for the entire duration of step (v); or
(vi") the first opening is moved around the outlet axis for a part of the duration of step (v).

13. The method according to any one of claims 10 to 12, wherein
the first opening is moved around the outlet axis at 50 to 5000 rotations/minute.

14. The method according to any one of claims 10 to 13, wherein
the coagulation of step (vii) is carried out by temperature induced phase separation (TIPS) and/or by non-solvent induced phase separation (NIPS).

15. The method according to any one of claims 10 to 14, further including a step of
(viii) separating the coagulated hollow fiber membrane and static mixer from the coagulation bath.
